**Europäisches Patentamt**

**European Patent Office**

**Office européen des brevets**

(11) Veröffentlichungsnummer : **0 088 070**
**B1**

(12) **EUROPÄISCHE PATENTSCHRIFT**

(45) Veröffentlichungstag der Patentschrift :
**30.07.86**

(51) Int. Cl.⁴ : **F 16 B 2/24**

(21) Anmeldenummer : **83890017.3**

(22) Anmeldetag : **07.02.83**

(54) **Klammer.**

<table>
<tr><td>

(30) Priorität : **11.02.82 DEU 8203745**

(43) Veröffentlichungstag der Anmeldung :
**07.09.83 Patentblatt 83/36**

(45) Bekanntmachung des Hinweises auf die Patenterteilung : **30.07.86 Patentblatt 86/31**

(84) Benannte Vertragsstaaten :
**AT DE FR GB SE**

(56) Entgegenhaltungen :
**DD-U- 6 932**
**DE-A- 2 928 473**
**DE-C- 362 901**
**DE-U- 1 833 829**
**DE-U- 6 750 869**
**GB-A- 1 590 246**
**US-A- 2 567 903**
**US-A- 3 438 603**

</td><td>

(73) Patentinhaber : **Tiedemann, Roman**
**Laxenburgerstrasse 226**
**A-1232 Wien (AT)**

(72) Erfinder : **Tiedemann, Roman**
**Laxenburgerstrasse 226**
**A-1232 Wien (AT)**

(74) Vertreter : **Weinzinger, Arnulf, Dipl.-Ing. et al**
**Patentanwälte Dipl.-Ing. Helmut Sonn Dr. Heinrich**
**Pawloy Dipl.-Ing. Arnulf Weinzinger Riemergasse 14**
**A-1010 Wien (AT)**

</td></tr>
</table>

Jouve, 18, rue St-Denis, 75001 Paris, France

**Beschreibung**

Die Erfindung betrifft eine Klammer mit zwei relativ zueinander federnd beweglichen Klemmschenkeln, wobei einer der Klemmschenkel durch eine gesonderte Feder gebildet ist, welche mit einem Ende mit dem anderen Klemmschenkel verbunden ist.

Klammern mit zwei gegeneinander federnden, über einen Klammerrücken miteinander verbundenen Klemmschenkeln — wobei beispielsweise der eine Klemmschenkel steif und der andere elastisch ausgeführt sein kann — werden beispielsweise zum Anbringen von Preis- oder Reklameschildern an Regalfächern in Geschäftslokalen verwendet, wobei am Klammerrücken irgendein Kupplungsteil angeordnet ist, der zur Verbindung mit dem Preisschild od. dgl., etwa mit einem korrespondierenden Kupplungsteil an einem Steckrahmen für ein derartiges Preisschild, dient. Andere derartige Klammern werden beispielsweise als sogenannte Tischspangen zum Fixieren von Tischtüchern an Tischplatten verwendet. Eine weitere, tischspangenartige Klammer, die aus der DE-C-362 901 bekannt ist, und bei der eine ungefähr V-förmige Blattfeder mit einem Ende an einem Schenkel eines U-förmigen Klammerbügels befestigt ist, während sie mit ihrem anderen, freien Ende mit dem gegenüberliegenden Schenkel zum Festklemmen zusammenwirkt, dient als Spitzen- und Bortenhalter für Wand- oder Schrankbretter.

Bei allen diesen Klammern ist von Nachteil, daß der Abstand zwischen den federnd gegeneinander beweglichen Klemmschenkeln nur in relativ geringem Maß variierbar ist, und zwar auch dann, wenn der eine, elastische Klemmschenkel schräg zum anderen Klemmschenkel verläuft, wie dies z. B. bei den genannten Tischspangen oder bei der Klammer gemäß der DE-C-362 901 der Fall ist. Demgemäß kann ein und dieselbe Klammer nur bei Platten, Fächern od. dgl. verwendet werden, deren Dicken in einem bestimmten, engen Bereich liegen. Dieser Nachteil trifft auch auf Klemmvorrichtungen, z. B. für Preisschilder, zu, die aus einer verformten Kunststoffplatte bestehen, die mit dem Preisschild vernietet wird, und die zwei Abkantstellen aufweist, wobei an eine hievon in einem Stück eine Federzone anschließt.

Der Erfindung liegt daher die Aufgabe zugrunde, eine Klammer der eingangs angegebenen Art zu schaffen, die bezüglich der Dicken von Platten, Regalfächern usw. einen wesentlich vergrößerten Anwendungsbereich hat, sodaß eine bestimmte Klammer bei Platten, Regalfächern od. dgl. verwendbar ist, deren Dicken oder Stärken um Größenordnungen — z. B. 1 mm/5 cm — variieren können.

Diese Aufgabe ist bei der erfindungsgemäßen Klammer der eingangs angegebenen Art dadurch gelöst, daß als gesonderte Feder eine Rollfeder vorgesehen ist, die mit ihrem äußeren Ende mit dem anderen Klemmschenkel verbunden ist.

Eine solche Klammer ist außerordentlich vielseitig verwendbar. Beispielsweise kann mit einer derartige Klammer ein Blatt Papier an einem Karton festgeklemmt werden, ebenso wie ein Tischtuch an einer Tischplatte fixiert werden kann, wobei die verschiedensten Tischplattenstärken möglich sind. Weiters kann eine derartige Klammer zur Anbringung von Preisschildern, Werbetafeln u. dgl. an verschieden starken Regalfächern eingesetzt werden. Die Dicke der Fachbretter, Tischplatten usw. kann dabei von einigen mm bis zu einigen cm variieren, etwa von 0 bis 5 oder 10 cm, wobei doch ein und dieselbe Klammer eingesetzt werden kann. Dadurch erübrigt es sich, für die verschiedenen Platten- oder Fachbrettstärken verschiedene Klammer vorrätig zu halten.

Um die Klammer auch an extrem dünnen Gegenständen festklemmen zu können oder aber um dünne Gegenstände gegeneinander zu klemmen, ist es von Vorteil, wenn die Rollfeder in der Ruhelage mit Vorspannung am anderen Klemmschenkel anliegt.

Insbesondere wenn die Klammer zur Anbringung von Preisschildern, Werbeschildern u. dgl. an Regalfächern vorgesehen ist, ist ein beispielsweise geradliniger Klammerrücken vorhanden, der die Klemmschenkel miteinander verbindet und der wie bereits erwähnt einen Kupplungsteil für die Befestigung des Schildes trägt. Es ist nun erfindungsgemäß von besonderem Vorteil, wenn bei Vorliegen eines die Klemmschenkel verbindenden Klammerrückens die Rollfeder mit ihrem äußeren Ende am Klammerrücken angebracht ist.

Andererseits ist es auch günstig, wenn die Rollfeder mit ihrem äußeren Ende am anderen Klemmschenkel angebracht ist und mit ihrem dem äußeren Ende benachbarten Bereich einen Klammerrücken bildet. Eine derartige Klammer ist besonders einfach und preiswert.

Aus Herstellungsgründen ist es vielfach vorzuziehen, wenn die Rollfeder mit ihrem äußeren Ende am anderen Klemmschenkel oder am Klammerrücken angenietet oder aber angelötet oder angeschweißt ist. Dabei kann der andere Klemmschenkel, gegebenenfalls zusammen mit dem Klammerrücken, aus Stahl oder aber insbesondere aus Kunststoff gefertigt werden. Um eine besonders einfache Befestigung der Rollfeder an einem solchen Kunststoff- oder Stahlteil, d. h. am anderen Klemmschenkel oder am Klammerrücken, zu ermöglichen, ist es weiters von Vorteil, wenn die Rollfeder mit ihrem äußeren Ende in eine im anderen Klemmschenkel oder im Klammerrücken vorgesehene, an dessen Stirnseite mündende, z. B. Sackloch-artige Ausnehmung eingesetzt ist. Dabei kann das äußere Ende der Rollfeder in der Ausnehmung beispielsweise eingeklebt werden. Ein besonders einfacher Zusammenbau ergibt sich jedoch, wenn die Rollfeder mit ihrem äußeren Ende in der Ausnehmung verrastet ist.

Die Rollfeder kann aus einem Band aus Federstahl bestehen. Vorzugsweise ist die Rollfeder ein in gewundener Form gespritzter Kunststofformling, dessen äußeres Ende verdickt ausgebildet ist. Eine solche Ausbildung ermöglicht besonders niedrige Gestehungskosten. Damit sich auch eine derart ausgebildete Klammer für einen besonders großen Bereich von Plattenstärken eignet, ist es hier weiters vorteilhaft, wenn die Rollfeder vom verdickten Ende in stetiger Krümmung in ihren gerollten Abschnitt übergeht.

Für die Rastverbindung ist es günstig, wenn die aus Federstahl od. dgl. bestehende Rollfeder im Bereich ihres äußeren Endes mit wenigstens einer ausgeschnittenen oder ausgestanzten, hochgebogenen Zunge versehen ist und mit dieser Zunge in der Ausnehmung verhakt ist. In entsprechender Weise kann das äußere Ende der Rollfeder mit einer beispielsweise nasenförmigen Verdickung versehen und mit dieser Verdickung in der Ausnehmung verhakt sein. Bei einer solchen Ausbildung verhakt sich die Zunge oder die Verdickung an der Wand der Ausnehmung, insbesondere wenn diese aus Kunststoff besteht, wobei dieses Verhaken durch die im Sinne eines Aufrollens der Rollfeder wirkenden Kraft auch am äußeren Ende der Rollfeder unterstützt wird. Um ein besonders sicheres Verhaken vorzusehen, kann die Zunge oder die Verdickung hinter einem Vorsprung an der ihr zugewandten Wand der Ausnehmung eingerastet sein. Eine andere vorteilhafte Rastverbindung wird erhalten, wenn die Zunge oder die Verdickung in einer Vertiefung oder Öffnung in der ihr zugewandten Wand der Ausnehmung eingerastet ist.

Um in Fall der Zunge oder Verdickung am äußeren Ende der Rollfeder deren Federkraft optimal auszunutzen, ist es weiters von Vorteil, wenn die Zunge oder die Verdickung an der beim Aufrollen der Rollfeder innen zu liegen kommenden Seite der Rollfeder vorgesehen ist. Dabei ist es ferner vorteilhaft, wenn an der der äußeren Seite der Rollfeder zugewandten Wand der Ausnehmung im Bereich von deren Mündung an der Stirnseite des Klemmschenkels oder Klammerrückens eine Erhebung zur zusätzlichen Verspannung des äußeren Endes der Rollfeder in der Ausnehmung vorgesehen ist.

Die Erfindung wird nachstehend anhand von in der Zeichnung dargestellten Ausführungsbeispielen noch weiter erläutert. Im einzelnen zeigen in der Zeichnung :

Figur 1 eine herkömmliche Klammer in Seitenansicht,

Figur 2 eine erste Ausführungsform der erfindungsgemäßen Klammer in Seitenansicht,

Figur 3 und 4 je eine weitere Ausführungsform der erfindungsgemäßen Klammer in einer schematischen Seitenansicht,

Fig. 5 in einer axonometrischen Ansicht den Klammerrücken der Klammer gemäß Fig. 4, zur Veranschaulichung der darin vorgesehenen Sackloch-artigen Ausnehmung für die Aufnahme des äußeren Endes der Rollfeder,

Fig. 6 in einer schematischen Seitenansicht eine aus einem gespritzten Kunststofformling gebildete Rollfeder,

Fig. 7 schematisch in einer schaubildlichen Ansicht den äußeren, mit hochgebogenen, ausgestanzten Zungen versehenen Endbereich einer aus Federstahl bestehenden Rollfeder,

Fig. 8 einen Längsschnitt durch einen Klammerrücken mit einer Ausnehmung, in der der äußere, mit Zungen gemäß Fig. 7 versehene Endbereich einer Rollfeder aufgenommen ist, und

Fig. 9 einen der Darstellung gemäß Fig. 8 entsprechenden Längsschnitt zur Veranschaulichung der Verrastung des äußeren Endes einer Rollfeder mit einer Verdickung in einer Ausnehmung, in deren Wand eine Öffnung oder Vertiefung für die Verdickung vorgesehen ist.

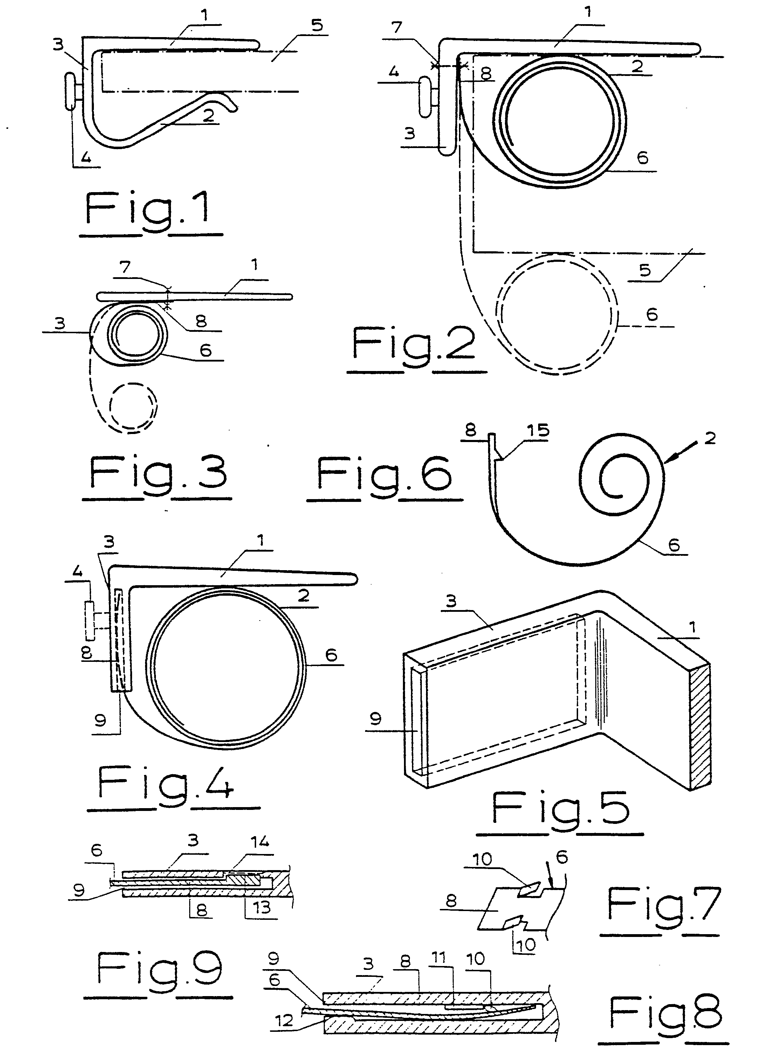

In Fig. 1 ist eine nicht erfindungsgemäße Klammer, die zur Befestigung von in Steckrahmen befindlichen Preisschildern, Reklameschildern od. dgl. an Regalfächern vorgesehen ist, in Seitenansicht dargestellt. Die gezeigte Klammer weist dabei einen geradlinigen, steifen Schenkel 1 sowie einen federnden, schrägen, mit einem abgebogenen Ende versehenen Schenkel 2 auf, der mit dem ersten Klemmschenkel 1 über einen Klammerrücken 3 verbunden ist. Der Klammerrücken 3 erstreckt sich ebenfalls im wesentlichen geradlinig und trägt an seiner Außenseite einen Kupplungsteil 4, der mit einem entsprechenden, nicht näher dargestellten Kupplungsteil am Steckrahmen (ebenfalls nicht dargestellt) zusammenarbeitet. Diese Klammer wird mit ihren beiden Schenkeln 1, 2 beispielsweise an einem in Fig. 1 mit strichpunktierten Linien veranschaulichten Regalfach 5 festgeklemmt. Dabei ist hinsichtlich der Dicke des Regalfaches 5 nur ein geringer Spielraum gegeben, d. h. bei einem beispielsweise doppelt so dicken Regalfach müßte bereits eine andere Klammer verwendet werden, da die beiden Schenkel 1, 2 nicht so weit auseinandergespreizt werden können. Ähnliches gilt, wenn das Regalfach 5 nur beispielsweise 1/4 so dick ist.

In Fig. 2 ist eine in dieser Hinsicht universell verwendbare Klammer in Seitenansicht gezeigt. Diese Klammer weist ebenfalls einen steifen, ebenen Klemmschenkel 1 auf, der mit einem Klammerrücken 3 einstückig ist, welcher wiederum einen Kupplungsteil 4 trägt. An der Innenseite des Klammerrückens 3 ist als federnd beweglicher Klemmschenkel 2 eine Rollfeder 6 angebracht, beispielsweise angenietet oder angeschraubt, wie in Fig. 2 schematisch bei 7 angedeutet ist. In der in Fig. 2 mit vollen Linien dargestellten Ruhelage liegt der Wickel, d. h. der gerollte Abschnitt, der bandförmigen Rollfeder 6 an der Innenseite des steifen Klemmschenkels 1 an, und zwar vorzugsweise mit einer bestimmten Vorspannkraft, sodaß auch ganz dünne Gegenstände, wie etwa einige Blätter Papier, gegeneinander geklemmt werden können. Andererseits kann die dargestellte Klammer auch auf außerordentlich dicke Platten, Fachbretter od. dgl. aufgeschoben werden, indem ein Teil der Rollfeder abgewickelt wird, wie in Fig. 2 schematisch mit gestrichelten Linien veranschaulicht ist. Das in Fig. 2 ebenfalls mit strichpunktierten Linien schematisch dargestellte Regalfach 5 kann dabei in seiner Dicke über einen außerordentlich großen Bereich variieren — beispielsweise kann eine Klammer, die normalerweise für ein ungefähr 2 cm dickes Regalfach bestimmt ist, auch an 5 oder 10 cm dicken Platten festgeklemmt werden.

An sich ist es nicht notwendig, daß ein Klammerrücken 3, wie in Fig. 2 dargestellt, vorgesehen ist, an dessen Innenseite die Rollfeder 6 mit ihrem äußeren freien Ende 8 angeordnet ist, die Rollfeder 6 kann vielmehr im einfachsten Fall mit ihrem äußeren Ende 8 auch direkt an anderen Klemmschenkel 1 angebracht, z. B. durch Annieten befestigt sein. Eine derartige Klammer ist in Fig. 3 in einer schematischen Seitenansicht gezeigt. Wie dabei ersichtlich ist, bildet die Rollfeder 6 mit ihrem dem äußeren, freien Ende 8, mit dem sie am anderen Klemmschenkel 1 bei 7 befestigt ist, benachbarten Bereich den Klammerrücken 3.

Wie ersichtlich sind die Klammern gemäß den Fig. 2 und 3 (und auch gemäß Fig. 4) zweiteilige Konstruktionen, wobei die mit dem insbesondere steifen Klemmschenkel 1 verbundene, etwa am mit diesem Klemmschenkel 1 einstückigen Klammerrücken 3 befestigte Rollfeder 6, die den zweiten, flexiblen, federnden Klemmschenkel 2 bildet, die Eignung der Klammer zur Befestigung an Platten, Regalfächern etc. mit den verschiedensten Dicken sicherstellt. Im Bereich der Befestigung der Rollfeder 6 am anderen Klammerteil, insbesondere am Klammerrücken 3, erstreckt sich der äußere Rollfeder-Endbereich 8 im wesentlichen parallel zum Klammerrücken 3 bzw. Klemmschenkel 1. Der Klemmschenkel 1, gegebenenfalls zusammen mit dem Klammerrücken 3, kann dabei aus Stahl bestehen, wird jedoch vorzugsweise aus Kunststoff hergestellt. Vor allem im Fall einer Herstellung aus Stahl kann die Rollfeder 6 mit ihrem äußeren Ende 8 außer durch Annieten, Anschrauben auch durch Anlöten oder Anschweißen befestigt werden. Eine montagemäßig besonders günstige Verbindungsart ist ferner bei der Klammer gemäß Fig. 4 und 5 vorgesehen. Diese Verbindungsart bzw. Modifikationen hievon werden anhand der Fig. 6 bis 9 nachstehend im Detail erläutert.

Bei der Klammer gemäß Fig. 4 ist wiederum ein steifer Klemmschenkel 1 vorgesehen, der zusammen mit einem Klammerrücken 3 in einem Stück aus Kunststoff gefertigt ist. Im Klammerrücken 3 ist eine schlitzförmige Ausnehmung 9 vorgesehen, die an der Stirnseite des Klammerrückens 3 mündet und sich von der Stirnseite des Klammerrückens 3 her in dessen Längsrichtung erstreckt. Die Ausnehmung 9 kann dabei, wie dargestellte, Sackloch-artig sein, sie kann jedoch im Prinzip auch in Gestalt einer durchgehenden Schlitzöffnung, mit einer zweiten Mündung an der Oberseite des Klemmschenkels 1, vorliegen. In diese Ausnehmung 9 wird das äußere Ende 8 der Rollfeder 6 einfach eingesteckt. Durch die Federkraft der Rollfeder 6, die auch im Bereich des äußeren, freien Endes 8 im Sinne eines Aufrollens wirkt, wird dieses äußere Ende 8 in der Ausnehmung 9 verspannt und festgehalten. Dabei kann der einfache Reibungsschluß bereits für eine Fixierung ausreichen. Zusätzlich könnte vor dem Einführen des äußeren Endes 8 der Rollfeder 6 ein Klebstoff in die Ausnehmung 9 eingebracht werden, um so das Ende 8 der Rollfeder 6 in der Ausnehmung 9 festzukleben. Andererseits ist es auch möglich, die Rollfeder 6 mit ihrem äußeren, freien Ende 8 an der Ausnehmung 9 zu verhaken oder verrasten. Dazu weist die Rollfeder 6 beispielsweise, wenn sie aus einem Federstahlband besteht, im Bereich ihres äußeren Endes 8 wenigstens eine — im vorliegenden Ausführungsbeispiel zwei — aus dem Federbandmaterial ausgestanzte und aus der Ebene des Bandes nach innen, d. h. auf jener Seite, die beim Aufrollen der Bandfeder 6 innen zu liegen kommt, hochgebogene Zunge(n) 10 auf, wie in Fig. 7 veranschaulicht ist. Diese Zungen 10 verhaken sich an der an der Innenseite der Klammer gelegenen Wand der Ausnehmung 9, auch wenn diese mehr oder weniger glatt ist (eine Ausnehmung mit solchen glatten Wänden ist schematisch in Fig. 5 veranschaulicht). Gemäß Fig. 8 kann überdies an der Wand der Ausnehmung 9, die der Zunge oder den Zungen 10 zugewandt ist, auch wenigstens ein blockförmiger oder buckelförmiger Vorsprung 11 in Ausrichtung zur Zunge bzw. zu den Zungen 10 vorgesehen sein, sodaß beim Einstecken des äußeren Endes 8 der Rollfeder 6 in die Ausnehmung 9 in der Endlage die Zunge bzw. Zungen 10 hinter dem Vorsprung oder den Vorsprüngen 11 einrastet bzw. einrasten. Wie weiters aus Fig. 8 ersichtlich ist, bewirkt die im Sinne eines Aufrollens wirkende Federkraft der Rollfeder 6 eine Krümmung des äußeren Endbereiches 8 der Rollfeder 6, wodurch dieser Endbereich 8 in der Ausnehmung 9 verspannt wird. Um diese Verspannung zusätzlich zu begünstigen, kann an der Wand der Ausnehmung 9, die der mit dem Vorsprung 11 versehenen Wand gegenüberliegt, im Bereich der Mündung der Ausnehmung 9 an der Stirnseite des Klammerrückens 3 eine Erhebung 12 vorgesehen sein. Diese Erhebung 12 kann buckelförmig oder noppenförmig ausgestaltet sein.

Gemäß Fig. 6 kann die Rollfeder 6, die hier aus einem in gewundener Form gespritzten Kunststofformling, mit einem verdickten äußeren Ende 8, besteht, an ihrem äußeren Ende auch mit einer Fixiernase 15 versehen sein, die ähnlich wie die Zunge(n) 10 gemäß Fig. 7 ein Verhaken bzw. Verrasten in der Ausnehmung 9 im Klammerrücken 3 bzw. im anderen Klammerschenkel 1 ermöglicht. Die Rollfeder 6 gemäß Fig. 6 wird dabei in der vorgesehenen Gestalt im Spritzguß hergestellt, wobei sie vom verdickten äußeren Ende 8 in stetiger Krümmung in den gerollten Abschnitt übergeht.

Anstatt den äußeren Endbereich 8 der Rollfeder 6 mit einer oder mehreren Zungen 10 oder mit einer Fixiernase 15 zu versehen, kann das äußere Ende 8 der Rollfeder 6 auch mit einer in Draufsicht z. B. kreisförmigen oder rechteckigen Verdickung 13 versehen sein, wie dies schematisch in Fig. 9 im Schnitt veranschaulicht ist. Mit dieser Verdickung 13 rastet das äußere Ende 8 der Rollfeder 6 im in die Ausnehmung 9 eingesetzten Zustand in eine Vertiefung oder Öffnung 14 in der Wand der Ausnehmung 9 ein. Die Öffnung 14 kann sich dabei wie in Fig. 9 gezeigt, durch die Wand vollständig hindurch erstrecken und so einen Zugang zur Verdickung 13 von außen her ermöglichen. Damit kann im Falle, daß ein Abnehmen der Rollfeder vom Klammerrücken 3 bzw. dem aus dem Klammerrücken 3 und dem Klemmschenkel bestehenden Klammerteil erwünscht ist, das äußere Ende 8 der Rollfeder 6 mit Hilfe eines spitzen Werkzeuges, das durch die Öffnung 14 gesteckt wird, im Bereich des verdickten Endes, d. h. der Verdickung 13, gemäß der Darstellung in Fig. 9 nach unten gedrückt werden, wonach das Ende 8 der Rollfeder 6 aus der Ausnehmung 9 herausgezogen werden kann. Wie andererseits in Fig. 9 mit gestrichelten Linien veranschaulicht ist, kann jedoch die Verdickung 13 auch bloß in eine Vertiefung in der Wand der Ausnehmung 9 einrasten, d. h. es ist keine durch die Wand hindurchgehende Öffnung vorgesehen.

Es sei erwähnt, daß selbstverständlich die Ausnehmung 9, wie sie vorstehend anhand der Fig. 4 bis 9 erläutert wurde, auch anstatt im Klammerrücken 3 im anderen Klemmschenkel 1 vorhanden sein kann, wobei dann eine Klammerkonfiguration im Prinzip ähnlich jener gemäß Fig. 3 (abgesehen von der anderen Art der Befestigung der Rollfeder 6 am Klemmschenkel 1) erhalten wird, und wobei dann die Rollfeder 6 selbst mit ihrem dem äußeren, freien Ende 8, das stirnseitig in die Ausnehmung im Klemmschenkel 1 eingesteckt ist, benachbarten Bereich den Klammerrücken 3 bildet.

Selbstverständlich sind noch weitere Abwandlungen und Modifikationen der erfindungsgemäßen Klammer möglich. So kann auch bei der Klammer gemäß Fig. 4 am Klammerrücken 3 ein Kupplungsteil 4 vorgesehen sein, wie dies schematisch mit gestrichelten Linien angedeutet ist. Anstatt der in der Zeichnung gezeigten Kupplungsteile können selbstverständlich auch andere, bekannte Einrichtungen vorhanden sein, die zum Anbringen irgendwelcher Gegenstände, wie Preis- oder Reklameschilder, geeignet sind, wie etwa Schlitzführungen u. dgl. mehr. Auch kann das äußere Ende 8 der Rollfeder 6 im Fall des Vorsehens von Zungen 10 gemäß Fig. 7 oder Nasen 15 gemäß Fig. 6 mit diesen Zungen 10 oder Nasen 15 in eine Vertiefung in der zugewandten Wand der Ausnehmung 9 ähnlich der Vertiefung oder Öffnung 14 gemäß Fig. 9 eingerastet sein, anstatt wie in Fig. 8 gezeigt hinter einem Vorsprung verhakt zu sein. Das Bandmaterial der Rollfeder 6 kann weiters bei den Klammern gemäß den Fig. 2 und 3 gleich breit wie der andere Klemmschenkel 1 bzw. gegebenenfalls der Klammerrücken 3 sein, es kann jedoch auch — ähnlich wie bei der Klammer gemäß Fig. 4 — schmäler sein, sodaß der andere Klemmschenkel 1 bzw. gegebenenfalls auch der Klammerrücken 3 in Breitenrichtung über die Rollfeder 6 vorsteht und so das Erfassen der Klammer am Klemmschenkel oder Klammerrücken begünstigt und weiters vermeiden hilft, daß die Klammer mit der Rollfeder ungewollt z. B. an den festzuklemmenden Tischtüchern usw. hängenbleibt.

Auch sei erwähnt, daß an sich die Zungen 10, Nasen 15 bzw. Verdickungen 13 nicht nur auf jener Seite der Rollfeder abstehen können, die bezüglich der Klammer als « Innenseite » zu bezeichnen ist, sondern auch zur Klammeraußenseite hin abstehen können. In diesem Fall werden diese Rastmittel zweckmäßigerweise in jenem Bereich vorgesehen, der im eingesetzten Zustand ungefähr in der Mitte der Tiefe der Ausnehmung zu liegen kommt, also in jenem Bereich, wo die Rollfeder zufolge der Krümmung bzw. ihrer Federkraft an der äußeren Wand der Klammer (in Fig. 8 die untere Wand) anliegt.

**Patentansprüche**

1. Klammer mit zwei relativ zueinander federnd beweglichen Klemmschenkeln (1, 2), wobei einer (2) der Klemmschenkel (1, 2) durch eine gesonderte Feder (6) gebildet ist, welche mit einem Ende (8) mit dem anderen Klemmschenkel (1) verbunden ist, dadurch gekennzeichnet, daß als gesonderte Feder eine Rollfeder (6) vorgesehen ist, die mit ihrem äußeren Ende (8) mit dem anderen Klemmschenkel (1) verbunden ist.

2. Klammer nach Anspruch 1, dadurch gekennzeichnet, daß die Rollfeder (6) in der Ruhelage mit Vospannung am anderen Klemmschenkel (1) anliegt (Fig. 2, 3, 4).

3. Klammer nach Anspruch 1 oder 2, dadurch gekennzeichnet, daß bei Vorliegen eines die Klemmschenkel (1, 2) verbindenden Klammerrückens (3) die Rollfeder (6) mit ihrem äußeren Ende (8) am Klammerrücken (3) angebracht ist (Fig. 2, 4).

4. Klammer nach Anspruch 1 oder 2, dadurch gekennzeichnet, daß die Rollfeder (6) mit ihrem äußeren Ende (8) am anderen Klemmschenkel (1) angebracht ist und mit ihrem dem äußeren Ende (8) benachbarten Bereich einen Klammerrücken (3) bildet (Fig. 3).

5. Klammer nach einem der Ansprüche 1 bis 4, dadurch gekennzeichnet, daß die Rollfeder (6) mit ihrem äußeren Ende (8) am anderen Klemmschenkel (1) oder am Klammerrücken (3) angenietet ist.

6. Klammer nach einem der Ansprüche 1 bis 4, dadurch gekennzeichnet, daß die Rollfeder (6) mit ihrem äußeren Ende (8) am anderen Klemmschenkel (1) oder am Klammerrücken (3) angelötet oder angeschweißt ist.

7. Klammer nach einem der Ansprüche 1 bis 4, dadurch gekennzeichnet, daß die Rollfeder (6) mit ihrem äußeren Ende (8) in eine im anderen Klemmschenkel (1) oder im Klammerrücken (3) vorgesehene, an dessen Stirnseite mündende, z. B. Sackloch-artige Ausnehmung (9) eingesetzt ist.

8. Klammer nach Anspruch 7, dadurch gekennzeichnet, daß die Rollfeder (6) mit ihrem äußeren Ende (8) in der Ausnehmung (9) eingeklebt ist.

9. Klammer nach Anspruch 7, dadurch gekennzeichnet, daß die Rollfeder (6) mit ihrem äußeren Ende (8) in der Ausnehmung (9) verrastet ist.

10. Klammer nach einem der Ansprüche 1 bis 9, dadurch gekennzeichnet, daß die Rollfeder (6) ein in gewundener Form gespritzter Kunststofformling ist, dessen äußeres Ende (8) verdickt ausgebildet ist.

11. Klammer nach Anspruch 10, dadurch gekennzeichnet, daß die Rollfeder (6) vom verdickten Ende (8) in stetiger Krümmung in ihren gerollten Abschnitt übergeht.

12. Klammer nach Anspruch 9, dadurch gekennzeichnet, daß die aus Federstahl od. dgl. bestehende Rollfeder (6) im Bereich ihres äußeren Endes (8) mit wenigstens einer ausgeschnittenen oder ausgestanzten, hochgebogenen Zunge (10) versehen ist und mit dieser Zunge (10) in der Ausnehmung (9) verhakt ist.

13. Klammer nach einem der Ansprüche 9 bis 11, dadurch gekennzeichnet, daß das äußere Ende (8) der Rollfeder (6) mit einer beispielsweise nasenförmigen Verdickung (13, 15) versehen und mit dieser Verdickung (13, 15) in der Ausnehmung (9) verhakt ist.

14. Klammer nach Anspruch 12 oder 13, dadurch gekennzeichnet, daß die Zunge (10) oder die Verdickung (13, 15) hinter einem Vorsprung (11) an der ihr zugewandten Wand der Ausnehmung (9) eingerastet ist.

15. Klammer nach Anspruch 12 oder 13, dadurch gekennzeichnet, daß die Zunge (10) oder die Verdickung (13, 15) in einer Vertiefung oder Öffnung (14) in der ihr zugewandten Wand der Ausnehmung (9) eingerastet ist.

16. Klammer nach einem der Ansprüche 12 bis 15, dadurch gekennzeichnet, daß die Zunge (10) oder die Verdickung (13, 15) an der beim Aufrollen der Rollfeder (6) innen zu liegen Kommenden Seite der Rollfeder (6) vorgesehen ist.

17. Klammer nach Anspruch 16, dadurch gekennzeichnet, daß an der der äußeren Seite der Rollfeder (6) zugewandten Wand der Ausnehmung (9) im Bereich von deren Mündung an der Stirnseite des Klemmschenkels (1) oder Klammerrückens (3) eine Erhebung (12) zur zusätzlichen Verspannung des äußeren Endes (8) der Rollfeder (6) in der Ausnehmung (9) vorgesehen ist.

## Claims

1. Clamp comprising two clamping legs (1, 2) elastically movable with respect to each other, one (2) of said clamping legs (1, 2) being formed by a separate spring (6) connected at one end (8) to the other clamping leg (1), characterized in that a coil spring (6) is provided as separate spring, said coil spring having its outer end (8) connected to the other clamping leg (1).

2. Clamp according to claim 1, characterized in that in the inoperative position, the coil spring (6) rests under tension against the other clamping leg (1) (figs. 2, 3, 4).

3. Clamp according to claim 1 or 2, characterized in that in the case that a clamp back portion (3) connecting the clamping legs (1, 2) is provided, the coil spring (6) has its outer end (8) mounted to the clamp back portion (3) (figs. 2, 4).

4. Clamp according to claim 1 or 2, characterized in that the coil spring (6) has its outer end (8) mounted to the other clamping leg (1) and forms with its zone adjacent said outer end (8) a clamp back portion (fig. 3).

5. Clamp according to anyone of claims 1 to 4, characterized in that the coil spring (6) has its outer end (8) riveted on the other clamping leg (1) or on the clamp back portion (3).

6. Clamp according to anyone of claims 1 to 4, characterized in that the coil spring (6) has its outer end (8) soldered or welded on the other clamping leg (1) or on the clamp back portion (3).

7. Clamp according to anyone of claims 1 to 4, characterized in that the coil spring (6) has its outer end (8) inserted in a, for instance blind-hole-like, recess (9) provided in the other clamping leg (1) or in the clamp back portion (3) and opening at the front end thereof.

8. Clamp according to claim 7, characterized in that the coil spring (6) has its outer end (8) glued within the recess (9).

9. Clamp according to claim 7, characterized in that the coil spring (6) has its outer end (8) snapped into the recess (9).

10. Clamp according to anyone of claims 1 to 9, characterized in that the coil spring (6) is a molded article produced from plastics material by injection molding in coiled form, the outer end (8) thereof being thickened.

11. Clamp according to claim 10, characterized in that the coil spring (6) changes from the thickened end (8) over into its coiled portion under continuous curvature.

12. Clamp according to claim 9, characterized in that the coil spring (6) which consists of spring steel or the like is provided with at least one tongue (10) in the zone of its outer end (8), said tongue being cut out or punched out, and being bent upwardly, and has this tongue (10) hooked within the recess (9).

13. Clamp according to anyone of claims 9 to 11, characterized in that the outer end (8) of the coil spring (6) is provided with a, for instance lug-shaped, thickened portion (13, 15), and has this thickened portion (13, 15) hooked within the recess (9).

14. Clamp according to claim 12 or 13, characterized in that the tongue (10), or the thickened portion, respectively (13, 15) is locked behind a projection (11) provided on the wall of the recess (9) facing it.

15. Clamp according to claim 12 or 13, characterized in that the tongue (10), or the thickened portion, respectively (13, 15) .is locked within a deepening or opening (14) in the wall of the recess (9) facing it.

16. Clamp according to anyone of claims 12 to 15, characterized in that the tongue (10), or the thickened portion, respectively (13, 15) is provided on that side of the coil spring (6) which upon coiling up of the coil spring (6) will be positioned inwardly.

17. Clamp according to claim 16, characterized in that a protrusion (12) is provided on that wall of the recess (9) facing the outer side of the coil spring (6) and in the zone of the mouth of the recess at the front end of the clamping leg (1) or clamp back portion (3), for additionally jamming the outer end (8) of the coil spring (6) within the recess (9).

**Revendications**

1. Pince ayant deux branches mobiles (1, 2) relativement élastiques l'une par rapport à l'autre, l'une (2) des branches de pince (1, 2) étant alors formée par un ressort particulier (6) qui est relié à une extrémité (8) à l'autre branche de pince (1), caractérisée en ce qu'on prévoit comme ressort particulier un ressort à col de cygne (6) qui est relié à son extrémité externe (8) à l'autre branche de pince (1).

2. Pince selon la revendication 1, caractérisée en ce que le ressort à col de cygne (6) repose · dans la position de repos avec une tension préliminaire sur l'autre branche de pince (1) (figures 2, 3, 4).

3. Pince selon la revendication 1 ou la revendication 2, caractérisée en ce que lorsqu'il y a une partie dorsale de pince (3) reliant les branches de pince (1, 2), le ressort à col de cygne (6) est disposé avec son extrémité externe (8) sur la partie dorsale (3) (figures 2, 4).

4. Pince selon la revendication 1 ou la revendication 2, caractérisée en ce que le ressort à col de cygne (6) est disposé avec son extrémité externe (8) sur l'autre branche de pince (1) et forme avec sa zone voisine de l'extrémité externe (8) une partie dorsale de pince (3) (figure 3).

5. Pince selon l'une des revendications 1 à 4, caractérisée en ce que le ressort à col de cygne (6) est rivé avec son extrémité externe (8) sur l'autre branche de pince (1) ou sur la partie dorsale de pince (3).

6. Pince selon l'une des revendications 1 à 4, caractérisée en ce que le ressort à col de cygne (6) est soudé ou brasé avec son extrémité externe (8) sur l'autre branche de pince (1) ou sur la partie dorsale de pince (3).

7. Pince selon l'une des revendications 1 à 4, caractérisée en ce que le ressort à col de cygne (6) est introduit avec son extrémité externe (8) dans un renfoncement (9) par exemple du type trou borgne, prévu dans l'autre branche de pince (1) ou dans la partie dorsale de pince (3) et débouchant sur son côté frontal.

8. Pince selon la revendication 7, caractérisée en ce que le ressort à col de cygne (6) est collé dans le renfoncement (9) avec son extrémité externe (8).

9. Pince selon la revendication 7, caractérisée en ce que le ressort à col de cygne (6) est encliqueté avec son extrémité externe (8) dans le renfoncement (9).

10. Pince selon l'une des revendications 1 à 9, caractérisée en ce que le ressort à col de cygne (6) est une ébauche de matière plastique injectée sous forme enroulée, dont l'extrémité externe (8) est conformée pour être plus épaisse.

11. Pince selon la revendication 10, caractérisée en ce que le ressort à col de cygne (6) évolue de son extrémité épaissie (8) en une courbe constante pour donner la section enroulée.

12. Pince selon la revendication 9, caractérisée en ce que le ressort à col de cygne (6) constitué par de l'acier de ressort ou analogue est muni au voisinage de son extrémité externe (8) d'au moins une languette (10) repliée vers le haut, découpée ou estampée, et est accroché avec cette languette (10) dans le renfoncement (9).

13. Pince selon l'une des revendications 9 à 11, caractérisée en ce que l'extrémité externe (8) du ressort à col de cygne (6) est munie d'un épaississement (13, 15) par exemple en forme de nez et accroché avec cet épaississement (13, 15) dans le renfoncement (9).

14. Pince selon. la revendication 12 ou la revendication 13, caractérisée en ce que la languette (10) ou l'épaississement (13, 15) sont encliquetés derrière une protubérance (11) sur la paroi tournée vers celle-ci du renfoncement (9).

15. Pince selon la revendication 12 ou la revendication 13, caractérisée en ce que la languette (10) ou l'épaississement (13, 15) sont encliquetés dans une cavité ou une ouverture (14) dans la paroi tournée vers celle-ci du renfoncement (9).

16. Pince selon l'une des revendications 12 à 15, caractérisée en ce que la languette (10) ou l'épaississement (13, 15) est prévu sur le côté du ressort à col de cygne (6) devenant interne lors de l'enroulement du ressort à col de cygne (6).

17. Pince selon la revendication 16, caractérisée en ce que sur la paroi du renfoncement (9) tournée vers le côté externe du ressort à col de cygne (6) et au voisinage de son embouchure sur le côté frontal de la branche de pince (1) ou de la partie dorsale de pince (3), on prévoit une surélévation (12) pour serrer additionnellement l'extrémité externe (8) du ressort à col de cygne (6) dans le renfoncement (9).

0 088 070

Fig.1

Fig.2

Fig.3

Fig.4

Fig.5

Fig.6

Fig.7

Fig8

Fig.9